# EUROPEAN PATENT APPLICATION

(11) **EP 2 408 205 A1**
(43) Date of publication of application: **18.01.2012**
(21) Application number: 10290383.8
(22) Date of filing: 12.07.2010
(51) Int. Cl.: H04N 7/24, H04N 7/26, H04L 29/06

(54) **A video server, video client and method of scalable encoding video files**

(71) Applicant: Alcatel Lucent, 75007 Paris (FR)
(72) Inventor: Van Leekwijck, Werner, 2610 Wilrijk (BE); Custers, Stefan, 2260 Westerlo (BE); De Vleeschauwer, Bart, 9200 Dendermonde (BE); De Vleeschauwer, Danny, 9940 Evergem (BE)
(74) Representative: Plas, Axel Ivo Michel

(57) **Abstract**

A scalable encoded video file (350; 411, 412, 413) is delivered from a video server (302; 402) to a video client (301; 401). Thereto, one or more base layers (351, 352; 413) of the scalable encoded video file (350; 411, 412, 413) are delivered over a first connection (331; 441) using a first priority class. One or more additional layers (353; 412) of the scalable encoded video file (350; 411, 412, 413) are delivered over a second connection (332; 442) using a second priority class. The second priority class has a priority that is lower than the first priority class.

## Description

### Field of the Invention

The present invention generally relates to delivery of scalable encoded video from a video server, i.e. either the originating video server or an intermediate proxy server, to a video client, e.g. a set-top box, laptop or mobile handset. A scalable encoded video file such as an SVC file encoded following the ITU-T H.264/MPEG-4 AVC Annex G standard, is a high quality video bitstream that contains plural layers or sub-bitstreams. The base layer typically represents a low quality version of the video signal, i.e. a low SNR, low picture size or low frame rate version of the video signal, or a combination thereof. The enhancement layers represent higher quality versions of the video signal but require the availability of one or more low quality layers. The invention in particular concerns the delivery of such scalable encoded video files over non real-time connections such as HTTP/TCP (HyperText Transfer Protocol / Transmission Control Protocol) connections with increased fairness between competing clients and reduced buffer requirements for clients.

### Background of the Invention

For efficient delivery of video files over the Internet, real-time protocols such as RTP (Real-time Transport Protocol) and UDP (User Diagram Protocol) have been developed. Due to the availability Content Delivery Networks (CDNs) with HTTP caching nodes for popular web pages, the familiarity of webpage developers with HTTP technology, and the more easy firewall traversal of HTTP/TCP since firewalls are configured to pass websites that are accessed through the web browser, there is a tendency to use non real-time protocols such as HTTP/TCP increasingly for delivery of video files over the Internet. In general, two different categories of solutions for delivering video files over the Internet via non real-time protocols such as HTTP/TCP can be distinguished: progressive download and adaptive streaming. These existing solutions and their respective shortcomings are discussed in the following paragraphs.

Progressive download of a video file from a server to a client over HTTP is described for instance in Wikipedia at the URL:
http://en.wikipedia.org/wiki/progressive_download
Typically, the video file is made available in different qualities or resolutions. Depending on for instance its type of Internet connectivity, or the specifications of the terminal whereon the video will be viewed, the user selects a particular version of the video file for download. With progressive download, the user may start viewing the video file as soon as a specified amount of data is available, i.e. before the download is complete. The specified amount of data depends on buffer settings embedded into the video file and buffer settings imposed by the media player that is used to playback the video file.

A drawback of progressive download is that playback of the video file will freeze when the buffer gets empty. The user selects the quality of the video file upfront. Whenever insufficient bandwidth is available during download, the buffer may run empty as a result of which the video playback will stand still or hamper. An additional disadvantage of progressive download is that the complete video file is downloaded as soon as possible, even if the user does not immediately watch the video file or has stopped watching the video file, quickly filling up a big buffer at the client side when network conditions are favorable. In case the user decides not to watch the full video, significant amount of bytes may be transferred uselessly, impacting the available bandwidth for competing clients in the network.

As opposed to progressive download, HTTP adaptive streaming, known for instance from the Adobe Datasheet "HTTP Dynamic Streaming" relies on the availability of video files in different qualities and segmented time slots of for instance 2 seconds duration. The cited Datasheet from Adobe can be retrieved from the Internet via the following URL:
http://192.150.8.60/uk/products/httpdynamicstreaming/pdfs/httpdynamicstream ing_datasheet.pdf
Time segments of different qualities can be combined when viewing the video. HTTP adaptive streaming enables the client to view the video in the highest quality possible, and to request lower quality segments when the available bandwidth in the network is insufficient, or at start-up of a new video in order to enable quick start through downloading initial segments of lower quality. Typically, the client shall try to keep its buffer filled to a certain level, e.g. 20 to 30 seconds playback time. When the buffer depletes, the client starts requesting lower quality segments of the video file in order to fill up the buffer more quickly and avoid freezing of the video.

Although the client automatically adapts the requested video quality to the network conditions, the client buffer cannot be small with HTTP adaptive streaming because the client has to cope with the prediction process on which quality to download the next segments. A small client buffer entails the risk that a video segment is not downloaded in time as a result of which the video playback will freeze. The client buffer required for HTTP adaptive streaming consequently introduces a viewing latency of 20 à 30 seconds which may be inconvenient, for instance when watching live events or when participating in interactive programs.

A further disadvantage of HTTP adaptive streaming is its inherent high request rate which puts a burden on the proxy servers and/or originating video server. Depending on the length of one video segment, the client shall have to send a request message every 2, 4, 8, ... seconds. These requests are useful in situations where the client requests different qualities because of varying network conditions, but represent useless overhead in situations where the client requests consecutive segments at the same quality, e.g. the highest quality the client terminal can display, for long periods.

Both, progressive download and HTTP adaptive streaming provide limited or no network control mechanisms. Clients will be competing for network bandwidth. In case of HTTP adaptive streaming for instance, a malicious client using a bigger client buffer, could request video segments at a pace that is much higher than required for linear playback. Further, knowledge that is available within the network, like for instance the presence of cached versions of slightly higher quality than the one requested, the actual current load, the urgency at which other clients need the next segments, ... is not exploited as a result of which neither progressive download nor HTTP adaptive streaming use the network capacity optimally and share the available bandwidth fairly amongst competing clients. As a consequence, clients adopting progressive download experience image freezing and download parts of video files at no purpose whereas clients adopting HTTP adaptive streaming are equipped with over-dimensioned buffers introducing viewing latency.

It is an objective of the present invention to resolve the above mentioned shortcomings of the prior art solutions. In particular, it is an objective of the present invention to disclose a video server, video client, and method for downloading a scalable encoded video file with increased fairness for competing clients, reduced buffer requirements for clients and enhanced network control mechanisms exploiting the available knowledge. It is an additional objective to provide such video server, video client and method for downloading scalable encoded video files that enable playback with reduced latency and with reduced request rate.

### Summary of the Invention

According to the present invention, the above identified shortcomings of the prior art are resolved by a video server able to deliver a scalable encoded video file to a video client as defined by claim 1, the video server being adapted to deliver one or more base layers of the scalable encoded video file over a first connection using a first priority class, and being adapted to deliver one or more additional layers of the scalable encoded video file over a second connection using a second priority class, the second priority class having a priority that is lower than the first priority class.

Thus, a video server operating according to the invention sends different layers of a scalable encoded video file or combinations thereof over different connections. One or more base layers, e.g. the SVC base layer and the first SVC enhancement layers, are sent over a TCP connection that belongs to a high priority network traffic class. Additional layers of the scalable encoded video file, e.g. additional SVC enhancement layers, are delivered by the video server via a second TCP connection that belongs to a lower priority network traffic class. As a result, only the base layers of different clients will be in competition. Assuming the network is dimensioned to support delivery of the base layers at any time, all clients requesting video files will receive base quality at any time. The additional layer connections of different clients will also be in competition and may hamper each other in case of high network load as a result of which clients requesting higher quality video delivery, will be able to enjoy the higher quality only at time instants where the network is able to deliver the requested enhancement layers of the video file timely without jeopardizing base quality video delivery to other clients. The video server according to the present invention can exploit all knowledge on the network conditions, service level agreements where the clients subscribed to, etc. in order to verify conformance of the requested base layers and requested additional layers, and in order to decide which network traffic priority classes will be used for the second or further connections over which the additional layers will be delivered to the different clients. Obviously, this will increase fairness between clients, and improve taking benefit of knowledge available in the network.

Since delivery of the base layers will be prioritized, the video clients no longer need a 20 to 30 seconds long buffer to guarantee base quality playback without freezing. Whereas simulations with prior art solutions implementing a 10 seconds buffer in video clients, suffer from buffer depletion and still images depending on the network load, simulations with the current invention demonstrate that video clients with buffers of 5 seconds (or even 3 seconds or 2 seconds) are achievable without risk for empty buffers and freezing images. An immediate further advantage thereof is the reduced latency which enhances the user-experience for live television and interactive programs.

When implementing the current invention with segmented video files, it is no longer needed (though still possible) to send a request message for each individual segment, indicating the quality (or layer) at which the segment has to be delivered. Consequently, the video clients also no longer need intelligence to estimate if and when a segment at a certain quality must be requested in order to be timely delivered for uninterrupted playback. According to the present invention, it is sufficient to send a request indicating the base quality, and a request indicating the preferred enhanced quality whereat a video file must be delivered. These requests may even be combined in a single message, further reducing the request burden on the network. Additional requests are only required when there is a change in the base quality level or a change in the enhanced quality level whereat a video client desires to receive the scalable encoded video file.

Optionally, as defined by claim 2, the video server according to the present invention may comprise means for receiving from a client requesting the scalable encoded video file information identifying the one or more base layers and/or information identifying the one or more additional layers.

Thus, one or more messages that contain information identifying the base layers that will be send over the first, high priority connection, and information identifying the additional layers that will be sent over the further, low priority connections, may replace the request messages from prior art solutions. In particular when video files are segmented and the prior art solutions require the transmission of a request message for each video file segment to be delivered, the savings in bandwidth consumed in the network and processing resources consumed in the video server and client will be significant.

Also optionally, as defined by claim 3, the video server according to the present invention may comprise means for verifying conformance of the information identifying the one or more base layers and/or information identifying the one or more additional layers.

Thus, the video server may exploit knowledge on the service levels ordered and paid for by the client to verify conformance of requests for base layers and additional layers of scalable video files. This way, malicious clients with bigger buffers requesting higher video quality at a faster pace than agreed and paid for, will be detected.

As is further indicated by claim 4, the scalable encoded video file optionally may be segmented.

Indeed, although the current invention is advantageous for download of any video file that is layered, the savings in bandwidth consumption in the network and processing requirements in the video server and client are even bigger when applied to download video files that are segmented, like for instance HTTP adaptive streaming of SVC encoded video files. The high request rate that puts a burden on the video server, proxy server, client and network, required in the prior art solutions to cope with different qualities that had to be requested in view of the actual network conditions, can be avoided according to the current invention.

According to a further optional aspect of the current invention, the video server may comprise means for synchronising the one or more base layers with the one or more additional layers.

Indeed, in case of increasing network load, the additional layers will be the first to suffer packet loss since they are sent over connections in a lower network traffic priority class. Transmission protocols with re-transmission support such as TCP will attempt to re-send the lost packets which could finally lead to the additional layers lagging too far behind the base layers to be useful for the client. The additional layer delivery therefore may have to be re-synchronized with the base layer delivery.

As is indicated by claim 6, the means for synchronizing may comprise means for skipping delivery of one or more segments of the one or more additional layers.

Indeed, in case of segmented video files, the additional layer delivery over low priority connections may be re-synchronized with the base layer delivery over high priority connections by skipping transmission of one or more segments of the additional layers.

As is further indicated by claim 7, the means for skipping delivery of one or more segments may be operating autonomously. Alternatively, as is indicated by claim 8, the means for skipping delivery of one or more segments may be operating on request of said video client.

Indeed, in case of traditional HTTP Adaptive Streaming (HAS) like behaviour with requests sent by the client for each segment to be delivered, the video client according to the present invention can control the skipping of segments by requesting a segment further ahead. In case of HTTP Control Streaming (HCS) like behaviour, the video server according to the present invention can monitor the segments delivered at both the base layers and additional layers, and autonomously decide to skip one or more segments in the additional layer delivery if that flow lags too far behind.

In addition to a video server as defined by claim 1, the current invention also concerns a corresponding video client able to request and receive a scalable encoded video file from a video server, as defined by claim 9. This video server is adapted to receive one or more base layers of the scalable encoded video file over a first connection using a first priority class, and is adapted to receive one or more additional layers of the scalable encoded video file over a second connection using a second priority class, the second priority class having a priority that is lower than the first priority class.

Furthermore, the current invention relates to a corresponding method for delivery of a scalable encoded video file from a video server to a video client as defined by claim 10. The method comprises:
- delivering one or more base layers of the scalable encoded video file over a first connection using a first priority class; and
- delivering one or more additional layers of the scalable encoded video file over a second connection using a second priority class, the second priority class having a priority that is lower than the first priority class.

### Brief Description of the Drawings

Fig. 1A illustrates a first prior art method for downloading a video file;

Fig. 1B illustrates operation of a client buffer 150 in the first prior art method for downloading a video file;

Fig. 2A illustrates a second prior art method for downloading a scalable encoded video file;

Fig. 2B illustrates operation of a client buffer 250 in the second prior art method for downloading a scalable encoded video file;

Fig. 3 illustrates a first embodiment of the method for downloading a scalable encoded video file 350 according to the invention;

Fig. 4A illustrates a second embodiment of the method for downloading a scalable encoded video file according to the invention; and

Fig. 4B illustrates operation of client buffers 450 and 460 in the embodiment of the method for downloading a video file according to the invention illustrated by Fig. 4A.

### Detailed Description of Embodiment(s)

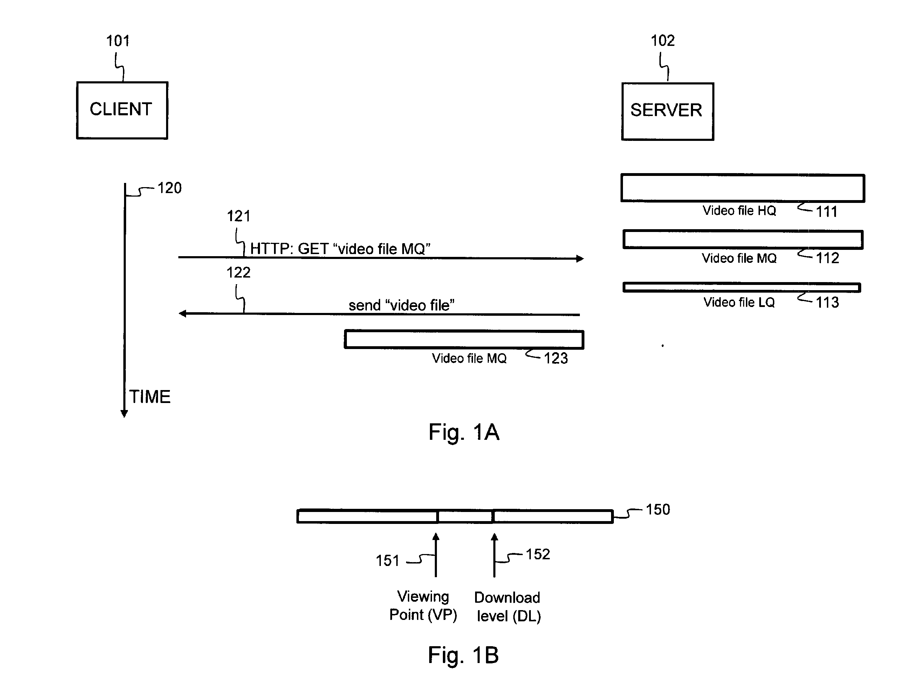

Fig. 1A illustrates the flow of messages in time 120 for an implementation of the prior art solution based on HTTP Progressive Download of a video file. The video file is available at the video server 102 in different versions: a high quality or HQ version 111, a medium quality or MQ version 112, and a low quality or LQ version 113. The client 101 chooses to download the medium quality version of the video file and thereto sends a request or HTTP GET message 121 to the server wherein it indicates that it wishes to download the video file at medium quality. In response, the video server 102 delivers the entire video file at medium quality 123 - which obviously corresponds to video file 112 stored in the server 102 - via stream 122.

Fig. 1B illustrates the operation of the buffer 150 in client 101 during the progressive download of video file 123. The user can start viewing the video file as soon as sufficient data are received. In Fig. 1B, the viewing point VP or 151 represents a pointer to the last location in the buffer that was read for playback of the video whereas the download level DL or 152 represents a pointer to the last location in the buffer where a downloaded byte was stored. As longs as the viewing point 151 lags behind the download level 152, the user will be able to uninterruptedly watch the video at the desired quality.

A drawback of progressive downloading as illustrated by Fig. 1A and Fig. B is the need for upfront selection of the quality and hence bit rate whereat the video file shall be downloaded. Further, the video playback will stall when the viewing point 151 reaches the download level 152 in the buffer 150, for instance as a result of changed network conditions. When the user stops viewing the video file, a number of bytes will have been downloaded uselessly, more precisely DL - VP useless bytes will have been transferred over the network.

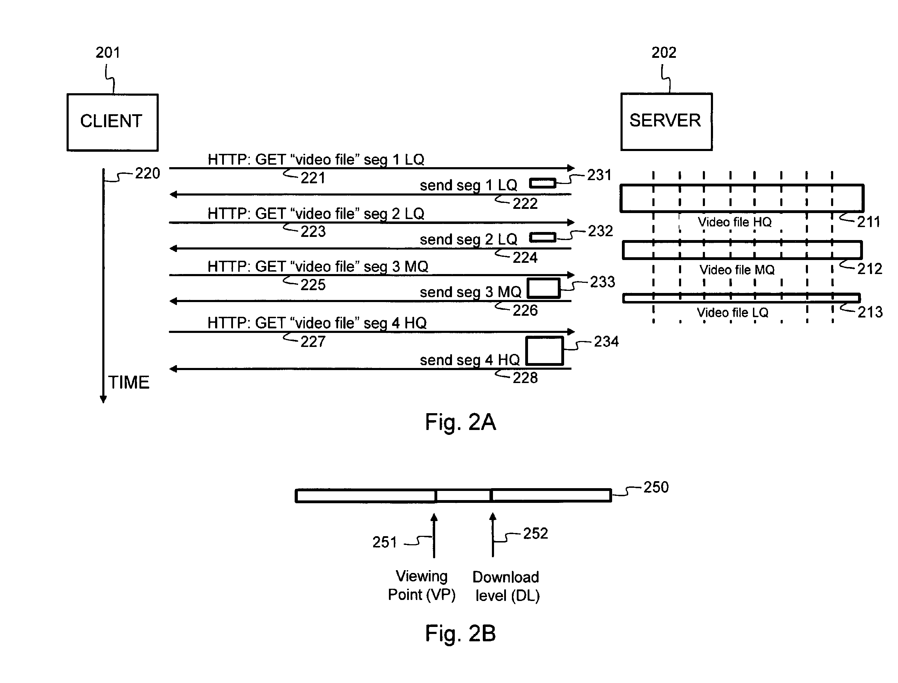

Fig. 2A illustrates the message flow in time 220 for an implementation of the prior art solution based on HTTP Adaptive Streaming or HAS of a segmented video file. At the server 202, either the originating server or a proxy server, the segmented video file is again available in different qualities: a high quality or HQ version 211, a medium quality or MQ version 212 and a low quality or LQ version 213. The client 201 sends requests, i.e. HTTP GET messages 221, 223, 225, 227, ..., in order to receive consecutive segments of the video file. In the requests, the client 201 indicates which segment it desires to receive and the quality whereat the requested segment is desired. In the first HTTP GET message 221, client 201 for instance requests the first segment, seg 1, at low quality LQ. In response to this first request 221, the server 202 delivers the low quality version of the first segment 231 to client 201. This is indicated by arrow 222 in Fig. 2A. In the second HTTP GET message 223, client 201 requests the second segment, seg 2, at low quality LQ. In response to this second request 223, the server 202 delivers the low quality version of the second segment 232 to client 201. This is indicated by arrow 224 in Fig. 2A. In the third HTTP GET message 225, client 201 requests the third segment, seg 3, at medium quality MQ. In response to this third request 225, the server 202 delivers the medium quality version of the third segment 233 to client 201. This is indicated by arrow 226 in Fig. 2A. In the fourth HTTP GET message 227, client 201 requests the fourth segment, seg 4, at medium quality HQ. In response to this fourth request 227, the server 202 delivers the high quality version of the fourth segment 234 to client 201. This is indicated by arrow 228 in Fig. 2A.

Fig. 2B illustrates operation of the buffer 250 in client 201. Again, two pointers are shown, a viewing point or VP pointer referring to the last byte that is read from buffer 250 for playback, and a download level or DL pointer referring to the last byte that was received from the server 202 and stored in the buffer 201. The client 201 keeps the buffer 250 filled for N seconds ahead in time by requesting appropriate quality segments: in case of buffer depletion the client 201 shall request the next segments in low quality so they can be downloaded faster; in case the buffer 250 is sufficiently filled, the client 201 shall request the next segments in a higher quality, i.e. MQ or HQ, such that the video can be viewed at a higher resolution. The client 201 in other words automatically changes the requested quality based on the client's capabilities and predicted network status, thereby avoiding that buffer 250 runs empty and images freeze.

A drawback of HTTP Adaptive Streaming is that the buffer 250 cannot be very small in order to minimize the risk that the viewing point 251 reaches the download level 252. In order to deal safely with the prediction error on the download time, a typical buffer length of 30 seconds is required. As a result, HTTP Adaptive Streaming is not suitable for live or interactive video experience. A further drawback of HTTP Adaptive Streaming is its inherent load on the network as a result of the consecutive GET messages that have to be sent every 2, 4, 6, 8, ... seconds depending on the length of the segments.

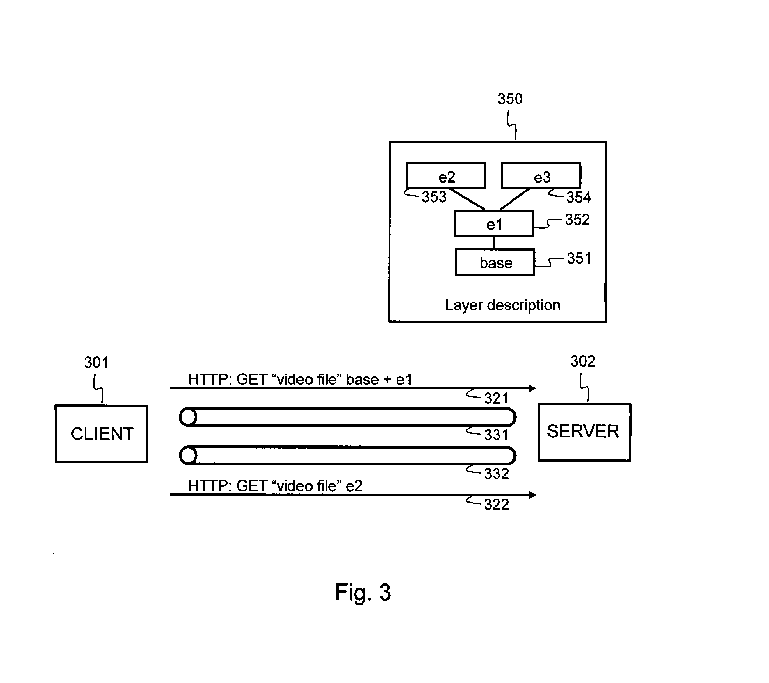

Fig. 3 shows a scalable encoded video file 350 that is delivered from the video server 302 to a client 301 in accordance with the current invention. The scalable encoded video file 350 has a layered structure with base layer 351, first enhancement layer E1 or 352 that is dependent on the base layer 351, second enhancement layer E2 or 353 that is dependent on the first enhancement layer 352 and the base layer 351, and third enhancement layer e3 or 354 that is dependent on the first enhancement layer 352 and the base layer 351 but not on the second enhancement layer 353. The dependencies between layer determine which layers are required at decoder side in order to be able to decode the video file at the corresponding quality level.

In the embodiment of the current invention illustrated by Fig. 3, the client 301 requests the base layers, which comprise base layer 351 and the first enhancement layer 352 to be delivered over a first connection 331. The server 302 upon receipt of the HTTP GET message 321, shall deliver the base layer 351 and first enhancement layer 352 over TCP connection 331. This TCP connection 331 shall have high network traffic priority. In parallel, the client 301 requests additional layers, in this case only the second enhancement layer 353, to be delivered over a separate connection. Upon receipt of HTTP GET message 322, the server 302 shall deliver the second enhancement layer 353 of video file 350 over a separate TCP connection 332 that shall have a lower network traffic priority than TCP connection 331.

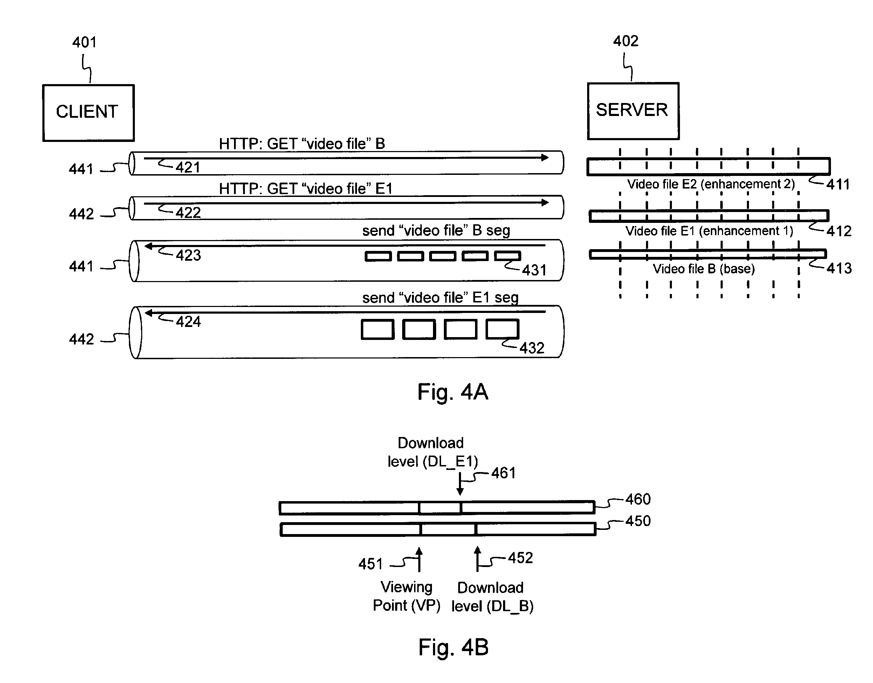

Fig. 4A illustrates the message flow for a second embodiment of the video delivery method according to the invention. Fig. 4A depicts a system for segmented SVC video delivery over HTTP, in which different layers or a combination thereof, are requested over different TCP connections. The video file under consideration is supposed to be SVC encoded, consisting of a base layer B or 413, a first enhancement layer E1 or 412, and a second enhancement layer E2 or 411. The video file is also supposed to be segmented as is indicated by the dashed lines in Fig. 4A.

The client 401 first retrieves the playlist or description file and determines its minimal base layers and the desired additional layers depending on the client's capabilities. In Fig. 4A, it is assumed that the base layers comprise only base layer B and the additional layers comprise only enhancement layer E1.

The client 401 thereupon requests the base layer B over a first connection, and the enhancement layer E1 over a separate connection. The requests are HTTP GET messages 421 and 422 respectively sent over different TCP connections 441 and 442 that are setup by client 401. It is noticed that the requests 421 and 422 can be sent repeatedly for each consecutive segment of the video file or only once in case the server 402 sends the consecutive segments autonomously.

Upon receipt of the HTTP GET messages 421 and 422, the server 402 determines if the client's request for base layers is according to policy, e.g. to avoid that the client 401 requests too many layers as base. If conform to policy, the server 402 starts feeding segments 431 of the base layer 413 at base priority over TCP connection 441. Segments 432 of enhancement layer 412 are delivered at lower priority via TCP connection 442 depending on network's DiffServ configuration.

The replies 423 and 424 with video segment delivery 431 and 432 over different TCP connections 441 and 442 are sent on different Differentiated Services Code Points (DSCPs) such that the base layer segments 431 are sent in a higher priority network-traffic class. The additional enhancement layer segments 432 are delivered via a lower priority traffic class. As a result, the base layers of different clients will be in competition, but assuming the network to be dimensioned adequately for this, all clients would receive base quality at any time. Enhancement layer connections like 442 will also be in competition and may hamper each other in case of high network load.

In case of higher network load, the additional layers, i.e. E1 in case of Fig. 4A, will be the first to suffer packet loss. TCP however will attempt to re-send the lost packets which could lead to the enhancement layer segments 432 lagging too far behind the base layer segments 431 to be useful for the client 401. In such case, the enhancement layer delivery has to be re-synchronized with the base layer delivery, e.g. skipping a number of segments. For traditional HTTP Adaptive Streaming (HAS) like behavior with segmented scalable encoded video files and requests sent for each segment, the client can take care of this by requesting a segment further ahead. In case of HTTP Control Streaming (HCS) like behavior, a variant wherein a request message is only sent when there is a change in the quality, the server could monitor the segments delivered at base layers and additional layers, and autonomously decide to skip some enhancement segments if the flow with enhancement segments lags behind too far.

As a result of the current invention, all relevant layers for the client are always requested and the network delivers as good as it can. Further, the client needs a smaller client buffer then with traditional HAS. The base layers and also the additional layers can be delivered on one or multiple TCP connections. The client decides on the minimal set of layers required for video playback, and the maximal set of layers consumable according to the client's capabilities. The constitution of base layers and additional layers can be updated at any time.

Fig. 4B shows the buffer 450 used in client 401 for storage of the base layer segments 431 and the buffer 460 used in client 401 for storage of the additional layer segments 432. Fig. 4B further shows the viewing point or VP pointer 451 referring to the current playback position in the video, the base download level or DL_B pointer 452 referring to the last byte stored in buffer 450, and the enhancement download level or DL_E1 pointer 461 referring to the last byte stored in buffer 460. As soon as sufficient data are received of the base layer, playback of the video file can start. Since the base layer segments are sent over a high priority connection, it is assumed that the DL_B pointer 452 will always be ahead of the viewing point 451. When the DL_E1 pointer 461 is ahead of the viewing point 451, the video can be played at higher, optimal quality. When DL_E1 pointer 461 is lagging behind the viewing point 451, either the client 401 or the server 402 will re-synchronize the enhancement layer delivery with the base layer delivery by skipping segments in the enhancement layer delivery.

It is noticed that, although the previous described embodiments of the current invention make use of a first and second connection with respective first and second priorities, the current invention is not limited to a particular number of connections and/or a particular number of priority classes. It will be evident for the skilled person that alternatives of the current invention wherein further enhancement layers are sent over connections with a third, fourth, fifth, ... priority are conceivable. Further, it is well known to use simultaneous TCP connections, e.g. within a single priority class, in order to increase the bit rate. Within the same first priority class for instance, multiple TCP connections can be used to convey the base layers from server to client.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A video server (302; 402) able to deliver a scalable encoded video file (350; 411, 412, 413) to a video client (301; 401),
**CHARACTERIZED IN THAT** said video server (302; 402) is adapted to deliver one or more base layers (351, 352; 413) of said scalable encoded video file (350; 411, 412, 413) over a first connection (331; 441) using a first priority class, and adapted to deliver one or more additional layers (353; 412) of said scalable encoded video file (350; 411, 412, 413) over a second connection (332; 442) using a second priority class, said second priority class having a priority that is lower than said first priority class.

2. A video server (302; 402) according to claim 1, said video server (302; 402) comprising:
means for receiving from a client (301; 401) requesting said scalable encoded video file (350; 411, 412, 413) information (321; 421) identifying said one or more base layers (351, 352; 413) and/or information (322; 422) identifying said one or more additional layers (353; 412).

3. A video server (302; 402) according to claim 2, said video server (302; 402) comprising:
means for verifying conformance of said information (321; 421) identifying said one or more base layers (351, 352; 413) and/or said information (322; 422) identifying said one or more additional layers (353; 412).

4. A video server (402) according to claim 1,
wherein said scalable encoded video file (411, 412, 413) is segmented.

5. A video server (302; 402) according to claim 1, said video server (302; 402) comprising:
means for synchronising said one or more base layers (351, 352; 413) with said one or more additional layers (353; 412).

6. A video server (402) according to claim 4 and claim 5,
wherein said means for synchronizing comprise means for skipping delivery of one or more segments (432) of said one or more additional layers (412).

7. A video server (402) according to claim 6,
wherein said means for skipping delivery of one or more segments (432) are operating autonomously.

8. A video server (402) according to claim 6,
wherein said means for skipping delivery of one or more segments (432) are operating on request of said video client (401).

9. A video client (301; 401) able to request and receive a scalable encoded video file (350; 411, 412, 413) from a video server (302; 402),
**CHARACTERIZED IN THAT** said video client (301; 401) is adapted to receive one or more base layers (351, 352; 413) of said scalable encoded video file (350; 411, 412, 413) over a first connection (331; 441) using a first priority class, and adapted to receive one or more additional layers (353; 412) of said scalable encoded video file (350; 411, 412, 413) over a second connection (332; 442) using a second priority class, said second priority class having a priority that is lower than said first priority class.

10. A method for delivery of a scalable encoded video file (350; 411, 412, 413) from a video server (302; 402) to a video client (301; 401),
**CHARACTERIZED IN THAT** said method comprises:
- delivering one or more base layers (351, 352; 413) of said scalable encoded video file (350; 411, 412, 413) over a first connection (331; 441) using a first priority class; and
- delivering one or more additional layers (353; 412) of said scalable encoded video file (350; 411, 412, 413) over a second connection (332; 442) using a second priority class, said second priority class having a priority that is lower than said first priority class.
